# EUROPEAN PATENT SPECIFICATION

(11) **EP 0 821 546 B1**
(45) Date of publication and mention of the grant of the patent: **13.09.2000**
(21) Application number: 97305529.6
(22) Date of filing: 23.07.1997
(51) Int. Cl.: H05B 41/16

(54) **Lighting circuit for discharge lamp**
Schaltung zum Betreiben einer Entladungslampe
Circuit pour alimenter une lampe à décharge

(30) Priority: 25.07.1996 JP 21334296
(43) Date of publication of application: 28.01.1998
(73) Proprietor: KOITO MANUFACTURING CO., LTD, Tokyo (JP)
(72) Inventor: Oda, Goichi, c/o Koito Manufacturing Co Ltd, Shimizu-shi, Shizuoka Pref. (JP)
(74) Representative: Rackham, Stephen Neil

(56) References cited:
- DE-C- 3 517 297
- US-A- 4 857 810
- US-A- 5 151 631
- US-A- 5 295 036

## Description

The present invention relates to a discharge lamp lighting circuit capable of temporarily stopping power supply to a discharge lamp when detecting an excessive level and a significant drop of a supply voltage or current to thereby protect the discharge lamp or circuitry.

A lighting circuit for a discharge lamp like a metal halide lamp should be equipped with means for protecting the discharge lamp and the circuitry against influence of a variation in the supply voltage or current. For example, one known lighting circuit comprises a detection circuit for detecting the supply voltage, comparison means for determining if a detection signal from the detection circuit lies within a predetermined allowable range, and means for determining whether or not to permit power supply to a discharge lamp in accordance with the comparison result, whereby power supply is cut off when the supply voltage varies and moves out of the predetermined range during lighting of the discharge lamp, and the inhibition of power supply is released when the supply voltage returns to the predetermined range thereafter.

According to the conventional lighting circuit, as disclosed in US-A-515631, a comparative reference value for the supply voltage for determining whether or not to permit power supply to a discharge lamp at the beginning of lighting of the discharge lamp is always set to a reference value which is used to check if the supply voltage lies in a predetermined range. In the case where the supply voltage, though sufficient to light a discharge lamp, temporarily varies which is likely to occur at the beginning of lighting of the discharge lamp or the like, power supply to the discharge lamp may be inhibited simply because the supply voltage does not reach the reference value for comparison.

As a solution to this shortcoming, comparison means having a reference value different from the aforementioned reference value for comparison may be provided separately so that the supply voltage at the beginning of lighting of the discharge lamp is compared with that reference value, and permission or inhibition of power supply to the discharge lamp is determined in accordance with the result of the comparison.

However, the provision of comparison means merely for making a reference voltage after the lighting of a discharge lamp irrespective of and independent of a reference voltage at the beginning of lighting of the discharge lamp complicates the circuit design or the circuit structure and inevitably increases the number of required components. This leads to a higher manufacturing cost.

DE-A-3,517,297 discloses a method for controlling the current supply to a lamp so that it falls between an upper and a lower limit of a comparator having a hysteresis characteristic.

According to this invention, there is provided a discharge lamp lighting circuit comprising power-supply permission determining means which has comparison means for detecting a supply voltage or current and performing comparison to check if the supply voltage or current lies within a predetermined range and determines whether or not to permit power supply to a discharge lamp in accordance with a comparison result, characterised in that the comparison means has a hysteresis characteristic based on first and second reference values at the beginning of the operation of the discharge lamp, the power supply permission determining means determines whether or not to permit power supply to the discharge lamp as a result of said comparison means using either said first reference value or said second reference value as the reference value for comparison; and,
during the operation of the discharge lamp, the power supply permission determining means stops power supply to the discharge lamp when the comparison means determines that the supply voltage or current is too small or too large with reference to said first reference value, and restarts the power supply to the discharge lamps when the comparison means determines that the supply voltage or current has returned to an acceptable value with reference to said second reference value.

According to this invention, therefore, a reference value for comparison with the supply voltage or current to determine whether or not to permit power supply to a discharge lamp at the beginning of lighting of the discharge lamp is selectively set to a first reference value for comparison or a second reference value for comparison associated with the comparison means, so that common comparison means can be used both at the beginning of lighting of the discharge lamp and after the discharge lamp is lit.

The invention, and objects and advantages thereof, may best be understood by reference to the following description of the presently preferred embodiments together with the accompanying drawings in which:
Figure 1 is a block diagram for explaining the basic structure of a lighting circuit according to the present invention;
Figure 2 is a circuit diagram for explaining the structure of comparison means;
Figure 3 is an explanatory diagram for a comparison operation after the lighting of a discharge lamp, for explaining, together with Figures 4 and 5, a comparison characteristic associated with the detection of a drop in supply voltage;
Figure 4 is an explanatory diagram for a comparison operation when a reference value V1 for comparison is selected at the beginning of lighting of the discharge lamp;
Figure 5 is an explanatory diagram for a comparison operation when a reference value V2 for comparison is selected at the beginning of lighting of the discharge lamp;
Figure 6 is an explanatory diagram for a comparison operation after the lighting of a discharge lamp, for explaining, together with Figures 7 and 8, a comparison characteristic associated with the detection of an excessive supply voltage;
Figure 7 is an explanatory diagram for a comparison operation when a reference value V1' for comparison is selected at the beginning of lighting of the discharge lamp;
Figure 8 is an explanatory diagram for a comparison operation when a reference value V2' for comparison is selected at the beginning of lighting of the discharge lamp;
Figure 9 is an explanatory diagram for the comparison characteristic of comparison means which has both the comparison characteristics shown in Figures 3 and 6;
Figure 10 is a circuit block diagram schematically illustrating one embodiment of this invention;
Figure 11 is a circuit diagram exemplifying the structure of a comparing circuit;
Figure 12 is a circuit diagram exemplifying the structure of an initial signal generator;
Figure 13 is a diagram showing output signals of the initial signal generator in Figure 12;
Figure 14 is a diagram for explaining, together with Figures 15 and 16, a circuit operation associated with the detection of a drop in battery voltage, showing the battery voltage varying after the lighting of a discharge lamp;
Figure 15 is a diagram for explaining a circuit operation at the beginning of lighting of the discharge lamp in the case where a battery of specified 12 V is used;
Figure 16 is a diagram for explaining a circuit operation at the beginning of lighting of the discharge lamp in the case where a battery of specified 24 V is used;
Figure 17 is a diagram for explaining, together with Figure 18, a circuit operation associated with the detection of an excessive battery voltage, showing the battery voltage varying after the lighting of a discharge lamp; and
Figure 18 is a diagram for explaining a circuit operation at the beginning of lighting of the discharge lamp.

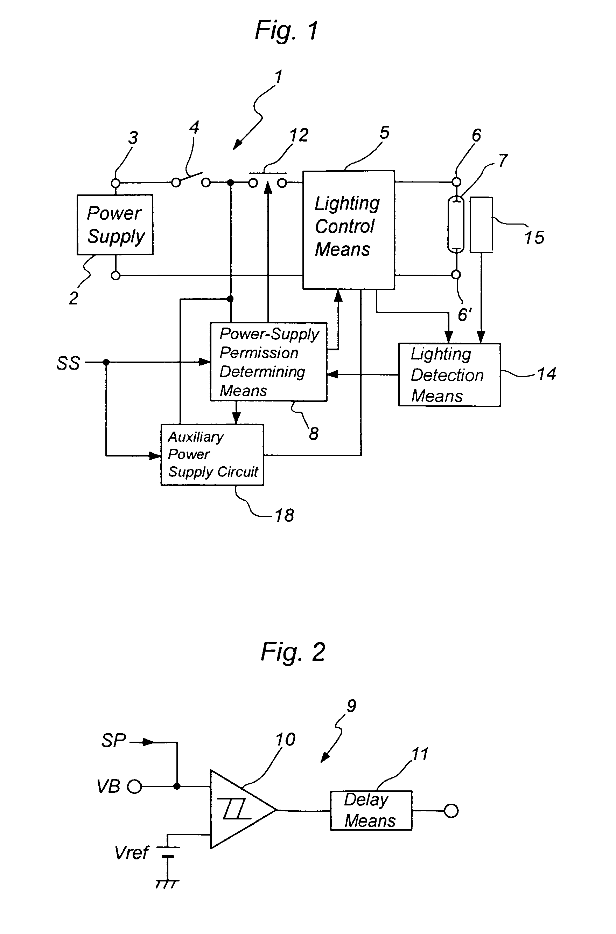

Figure 1 illustrates the basic structure of a lighting circuit 1 according to this invention. The lighting circuit 1 is designed in such a manner that a supply voltage from a power supply 2 is supplied via input terminals 3 and 3' and a lighting switch 4 to lighting control means 5 whose output is supplied to a discharge lamp 7 from output terminals 6 and 6'. The power supply 2 may generate a DC voltage or an AC voltage, and the lighting switch 4 may be activated manually or automatically.

The lighting control means 5 is provided to activate the discharge lamp 7 and control supply power to the discharge lamp 7.

Power-supply permission determining means 8 is provided to determine if the supply voltage (the voltage is what is to be detected in the following description) lies in a predetermined range and then to decide based on the result of the determination whether or not to permit power supply to the discharge lamp 7. The power-supply permission determining means 8 temporarily stops supplying power to the discharge lamp 7 when the supply voltage becomes excessively large or is less than necessary, and restarts power supply to the discharge lamp 7 when the supply voltage returns to the predetermined range. For this function, the power-supply permission determining means 8 is equipped with comparison means having a hysteresis characteristic.

Figure 2 shows comparison means 9 expressed as an equivalent circuit using a hysteresis comparator 10 which has two input terminals, one supplied with the supply voltage or a detected version thereof (denoted by "VB") and the other supplied with a reference voltage (shown by the symbol of a constant power supply and denoted by "Vref" in the figure). The hysteresis comparator 10 outputs a binary signal which accords with the result of comparison between two reference values for comparison and VB.

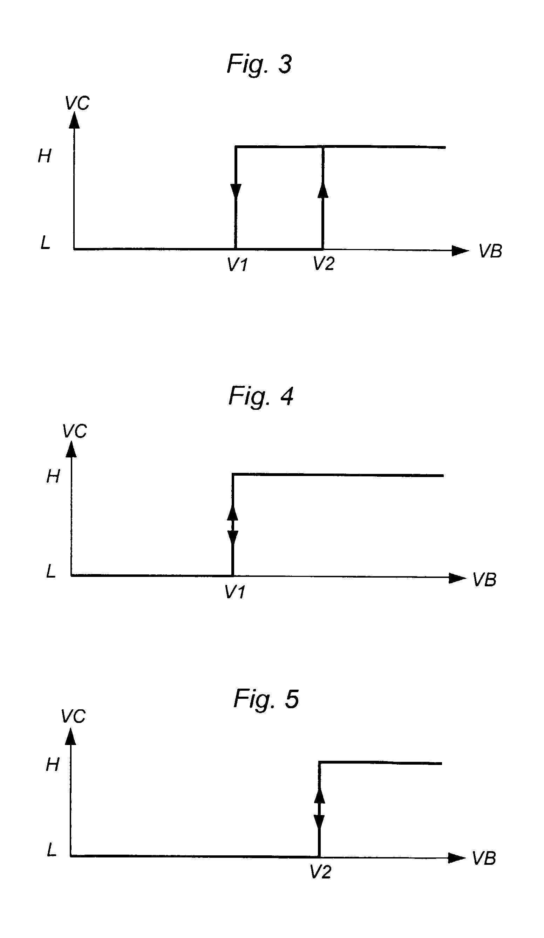

Figure 3 shows a characteristic (in the case of a positive logic) when the hysteresis comparator 10 is used to detect a drop in supply voltage once the discharge lamp 7 is lit, and describes the relationship between VB taken on the horizontal scale and the level of the output signal (indicated by "VC") of the hysteresis comparator 10 taken on the vertical scale. In the diagram, "V1" and "V2" (> V1) are the reference values for comparison of the hysteresis comparator 10, and "H" for VC indicates a high level and "L" a low level.

VC becomes an L level when VB drops below V1 due to a variation in supply voltage after the discharge lamp 7 is lit, and VC becomes an H level when VB is thereafter restored and goes higher than V1 and beyond V2. That is, when VB < V1, it is considered that the supply voltage has dropped significantly so that power supply to the discharge lamp is temporarily stopped, whereas when VB > V2, it is considered that the supply voltage has returned to an allowable range so that power supply to the discharge lamp is restarted.

If such inhibition and restarting of power supply to the discharge lamp are carried out immediately after the comparison of VB with the reference values V1 and V2, when VB varies in a short cycle, power supply to the discharge lamp and the inhibition of the power supply are frequently repeated. This may lead to the flickering of the discharge lamp, an unstable circuit operation or other undesirable effects. In this case, therefore, it is preferable that delay means 11 as shown in Figure 2 be provided at the subsequent stage of the comparison means 9.

The characteristic illustrated in Figure 3 is the characteristic of the comparison means 9 after the lighting of the discharge lamp, and at the beginning of lighting of the discharge lamp 7, the comparison means 9 substantially has one of the reference value V1 or V2 selected as shown in Figure 4 or 5. It is to be noted that "at the beginning of lighting" is when an instruction to light the discharge lamp 7 is issued (when the ignition switch 4 is activated or a lighting instruction signal to be described later is issued) and lighting of the discharge lamp 7 is initiated (regardless of whether or not the discharge lamp is actually lit), and it does not include the time at which lighting of the discharge lamp 7 is restarted under the control of the power-supply permission determining means 8. Therefore, the power-on time may be included in the time of the initiation to light the discharge lamp.

Figure 4 shows the case where V1 has been selected as the reference value for comparison at the beginning of lighting of the discharge lamp, and shows VC becoming an H level when VB > V1 and VC becoming an L level when VB < V1. Figure 5 shows the case where V2 has been selected as the reference value for comparison at the beginning of lighting of the discharge lamp, and shows VC becoming an H level when VB > V2 and VC becoming an L level when VB < V2.

The reference value for comparison may be selected by the following ways.
(I) A scheme to make the rising characteristic of VB at the beginning of lighting of the discharge lamp different from that of the reference voltage Vref.
(II) A scheme to input a signal which is generated only at the beginning of lighting of the discharge lamp to the comparison means.

The scheme (I) delays the rising of the reference voltage Vref of the comparison means 9 or gradually rises the reference voltage Vref at the beginning of lighting of the discharge lamp, as compared with the rising of the supply voltage, so that it is temporarily considered that the supply voltage is within an allowable range, and the reference voltage for comparison associated with the supply voltage at the beginning of lighting of the discharge lamp is specified to be one of the reference values for comparison associated with the hysteresis characteristic. For instance, the rising of the reference voltage Vref is delayed as compared with the rising of VB. Even when VB < V1, therefore, there is a period during which VC temporarily becomes an H level after which VC goes to an L level. When V1 < VB < V2, the relation of VB > V1 is maintained even after VC temporarily becomes an H level, so that VC stays at the H level. In other words, because Vref rises slower than VB, during the rising, V1 and V2 temporarily become smaller than a predetermined value, so that when VB < V1, VC becomes an L level after the rising of Vref is completed, whereas when V1 < VB < V2, VC stays at an H level even after the time. When VB > V2, VC remains at the H level. This comparison operation is after all the selection of the lower reference value V1 for the reference value for comparison at the beginning of lighting of the discharge lamp (see Figure 4).

The relative rising characteristics of VB and Vref are set by positively providing a circuit for delaying the rising of Vref (a time constant circuit or the like) or by modifying the circuit design directly using the delay characteristics of elements in the circuit which generates the reference voltage Vref.

The scheme (II) is accomplished by providing a signal generator, which produces a signal to be generated only at the beginning of lighting of the discharge lamp, sending this signal as an input signal to the comparison means 9 to temporarily force the inhibition of power supply to the discharge lamp, and defining the reference value for comparison associated with the supply voltage at the beginning of lighting of the discharge lamp to one of the reference values associated with the hysteresis characteristic. If the signal which is to be generated only at the beginning of lighting of the discharge lamp (this signal being denoted by "SP") is input to the input terminal for VB of the hysteresis comparator 10 to forcibly satisfy the relationship of VB + SP < V1 as shown in Figure 2, VC stays an L level thereafter unless VB > V2. That is, when and only when VB > V2 after the signal SP is input to the hysteresis comparator 10, VC becomes an H level. The hysteresis comparator 10 therefore serves as a simple comparator which substantially has only V2 as a threshold value. This is nothing but V2 is selected as the reference value for comparison (see Figure 5).

In either method, the common comparison means 9 can be used to detect the supply voltage after the lighting of the discharge lamp and to detect the supply voltage at the beginning of lighting of the discharge lamp, the comparison operation with the hysteresis characteristic based on two reference values for comparison is performed after the lighting of the discharge lamp, and one of those reference values for comparison is selected at the beginning of lighting of the discharge lamp.

Although the comparison means 9 detects a drop in the supply voltage in the foregoing description, it can of course be adapted to detect an excessive supply voltage as well.

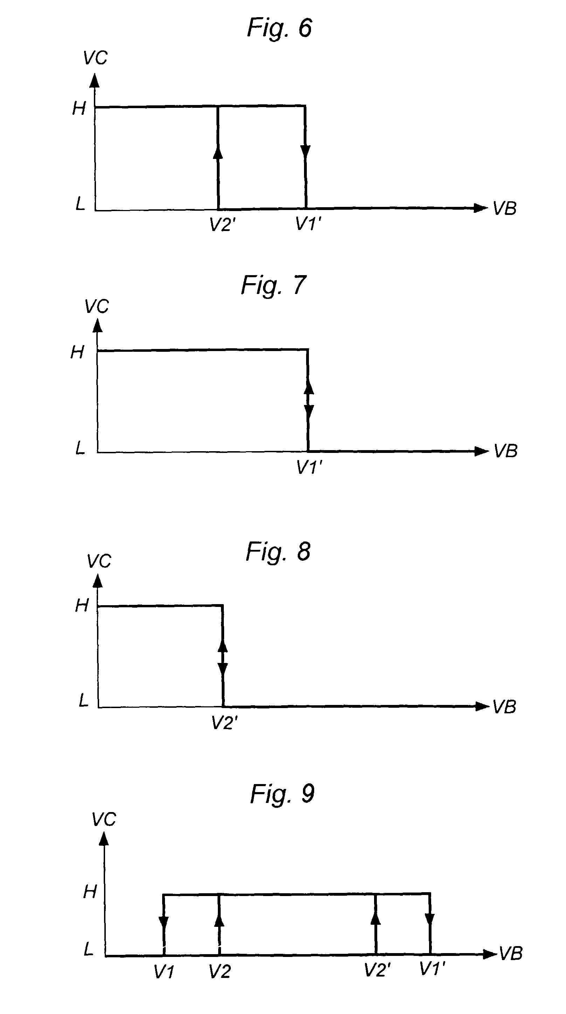

Figure 6 shows a characteristic (in the case of a positive logic) when the hysteresis comparator 10 is used to detect an excessive supply voltage of power supply 2 once the discharge lamp 7 is lit, and describes the relationship between VB taken on the horizontal scale and the level of the output signal VC of the hysteresis comparator 10 taken on the vertical scale. In the diagram, "V1"' and "V2"' (< V1') are the reference values for comparison of the hysteresis comparator 10, and "H" and "L" for VC are the same as those mentioned earlier.

VC changes to an L level from an H level when VB rises above V1' due to a variation in supply voltage after the lighting of the discharge lamp 7, and VC becomes an H level when VB thereafter falls below V2'. That is, when VB > V1', it is considered that the supply voltage becomes excessively large so that power supply to the discharge lamp 7 is temporarily stopped, whereas when VB < V2', it is considered that the supply voltage has returned to an allowable range so that power supply to the discharge lamp 7 is restarted.

At the beginning of lighting of the discharge lamp 7, the comparison means 9 substantially has one of the reference value V1' or V2' selected as shown in Figure 7 or 8. Figure 7 shows the case where V1' has been selected as the reference value for comparison, and shows VC becoming an L level when VB > V1' and VC becoming an H level when VB < V1'. Figure 8 shows the case where V2' has been selected as the reference value for comparison, and shows VC becoming an L level when VB > V2' and VC becoming an H level when VB < V2'. It should be noted that the reference value for comparison is selected by the above-discussed schemes (I) and (II).

Figure 9 shows the hysteresis characteristic of the comparison means 9 which is acquired by combining the characteristics shown in Figures 3 and 6; VC becomes an L level when VB < V1 or VB > V1' after the lighting of the discharge lamp 7, and VC becomes an H level when VB returns to be greater than V2 (VB > V2) or smaller than V2'(VB < V2') thereafter. It is apparent that there are four kinds of comparison characteristics at the beginning of lighting of the discharge lamp 7 depending on how to select the reference value for comparison.
i) VC = H when V1 < VB < V1' and VC = L otherwise.
ii) VC = H when V1 < VB < V2' and VC = L otherwise.
iii) VC = H when V2 < VB < V1' and VC = L otherwise.
iv) VC = H when V2 < VB < V2' and VC = L otherwise.

It is needless to say that increasing the number of comparison means can widen the range for selection of the reference value for comparison.

While the power-supply permission determining means 8 determines whether or not to permit power supply to the discharge lamp 7 in accordance with the result of the determination by the comparison means 9, the permission or inhibition of power supply to the discharge lamp can be accomplished by the following ways:
(a) A scheme to permit or cut off power supply to the lighting control means from the power supply.
(b) A scheme to control the enabling or disabling of the operation of the lighting control means.

With regard to the scheme (a), switch means 12 may be provided between the power supply 2 and the lighting control means 5 as shown in Figure 1, so that the switch means 12 is opened or closed to inhibit or permit power supply to the lighting control means 5.

The scheme (b), which disables or enables the operation of the lighting control means 5 by a signal sent from the lighting control means 5, is accomplished by power control for the discharge lamp 7 or stopping a voltage conversion process or the like, or by stopping the operation of an auxiliary power supply circuit 13 which supplies voltages needed for the components of the lighting control means 5.

Although only a variation in supply voltage is detected, whether to stop or permit power supply to the discharge lamp is determined in accordance with the result of determination by the comparison means 9, and this control is executed regardless of the lighting state of the discharge lamp in the foregoing description, the lighting state of the discharge lamp may be added as a condition for the detection associated with the supply voltage.

In other words, from the viewpoint of keeping the light-ON state of the discharge lamp as much as possible, it is preferable not to stop supplying power to the discharge lamp if the discharge lamp is lit even when the supply voltage is out of the allowable range, but it is preferable to stop power supply to the discharge lamp when the supply voltage is out of the allowable range and when the light-OFF state of the discharge lamp is detected.

In this case, lighting detection means 14 for detecting if the discharge lamp is lit should be provided so that the output of the lighting detection means 14 is sent to the power-supply permission determining means 8, as shown in Figure 1. The light-ON state of the discharge lamp may be detected by the following schemes.
(1) A scheme to determine the light-ON state of the discharge lamp based on a detection signal associated with the lamp voltage and/or lamp current of the discharge lamp or a control voltage and/or a control current equivalent to the lamp voltage and/or lamp current.
(2) A scheme to determine the light-ON state of the discharge lamp from whether or not the discharge lamp is emitting light.

With regard to the scheme (1), voltage/current detection means for acquiring a detection signal equivalent to the lamp voltage and/or the lamp current of the discharge lamp detecting the lamp voltage and/or the lamp current of the discharge lamp more directly should be provided in the lighting control means 5, and a detection signal from this voltage/current detection means should be sent to the lighting detection means 14. That is, the lighting detection means 14 detects the light-ON state or the light-OFF state by comparing the detected voltage and/or the detected current of the discharge lamp with a predetermined reference value for comparison.

The scheme (2) detects the light emission from the discharge lamp directly or indirectly. This scheme may be accomplished by providing a photosensor 15 for detecting the light from the discharge lamp, as shown in Figure 1, sending the output signal of the photosensor 15 to the lighting detection means 14 and then determining the light-ON state or the light-OFF state of the discharge lamp from the result of the comparison of the level of the output signal of the photosensor 15 with a predetermined threshold value, or by detecting the ambient temperature of the discharge lamp or the temperature of a member provided near the discharge lamp (e.g., the reflector or lens, the light-shielding member or the like) and determining the light-ON state or the light-OFF state of the discharge lamp based on the comparison of the detected temperature with a predetermined value.

While the ignition switch 4 is provided on the one of the power lines in Figure 1, various other modifications such as instructing the initiation of the lighting of the discharge lamp by sending a lighting instruction signal (denoted by "SS") to the power-supply permission determining means 8 or the auxiliary power supply circuit 13 may be possible.

Although the supply voltage is what is to be detected in the foregoing description, this invention may of course be easily adapted to the detection of a current.

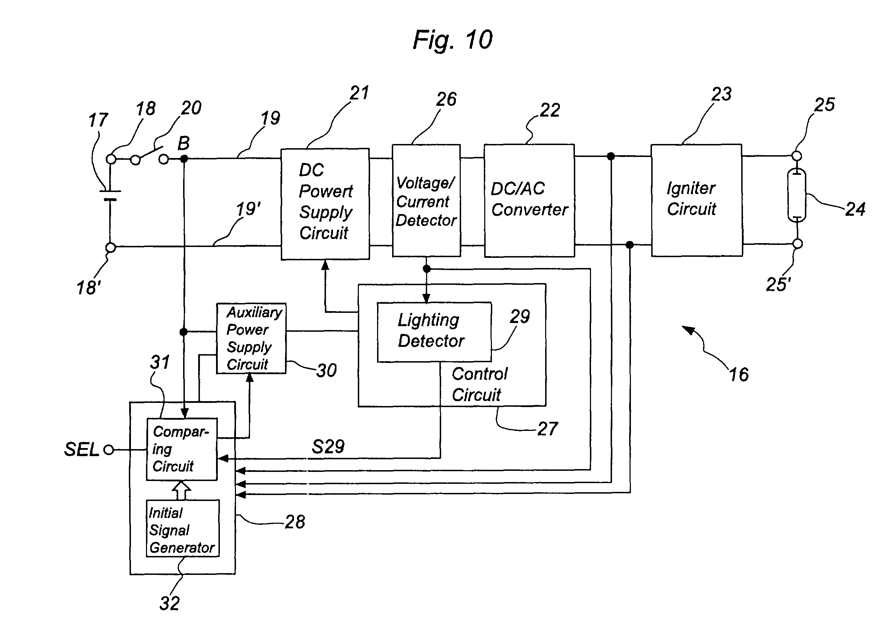

Figures 10 through 18 exemplify this invention as adapted to a lighting circuit for a vehicular discharge lamp.

In a lighting circuit 16 shown in Figure 10, a battery 17 as a DC power supply is connected between input terminals 18 and 18', and a lighting switch 20 is provided on one of DC power lines 19 and 19'.

A DC power supply circuit 21 boosts and/or decreases the battery voltage, and its output is converted to an AC voltage by a DC-AC converter 22.

An igniter circuit 23, located at the subsequent stage of the DC-AC converter 22, generates an activation pulse to be sent to a discharge lamp 24, superimposes this pulse on the output of the DC-AC converter 22, and applies the resultant signal to the discharge lamp 24 which is connected between AC output terminals 25 and 25'.

Provided between the DC power supply circuit 21 and the DC-AC converter 22 is a voltage/current detector 26 for detecting the output voltage and output current of the DC power supply circuit 21 (see the above-described scheme (1)). The voltage/current detector 26 sends a detection signal to a control circuit 27 and a power-supply permission determining circuit 28.

The control circuit 27 generates a control signal according to the detection signal from the voltage/current detector 26, and sends the control signal to the DC power supply circuit 21 to control the output voltage thereof. In this manner, the control circuit 27 performs power control which matches with the state of the discharge lamp 24 at the ignition time to shorten the ignition time and re-ignition time and stably light the discharge lamp 24 in the steady lighting mode. A lighting detector 29 for the discharge lamp 24 is provided in the control circuit 27, and sends a detection signal (denoted by "S29" and having an H level at the time the discharge lamp is lit) indicative of the light-ON state/light-OFF state of the discharge lamp 24 to the power-supply permission determining circuit 28 based on the detection signal from the voltage/current detector 26.

The power-supply permission determining circuit 28 permits or inhibits power supply to the discharge lamp 24 by detecting the excess battery voltage or a significant drop in battery voltage or determining if an abnormality has occurred in the discharge lamp or the lighting circuit from the detection signal from the voltage/current detector 26, the output of the DC-AC converter 22 or the like, and controlling the permission or inhibition of power supply to the individual sections of the lighting circuit from an auxiliary power supply circuit 30 (see the above-described scheme (b)).

The power-supply permission determining circuit 28 has a comparing circuit 31 and an initial signal generator 32. Input to the comparing circuit 31 are the battery voltage (to be precise, the input voltage from the battery 17 denoted by "B"), the output signal of the initial signal generator 32, the detection signal S29 from the lighting detector 29 and an instruction signal "SEL" (which becomes an H level when the lighting state of the discharge lamp 24 should be referred) for selecting whether or not to refer to the lighting state of the discharge lamp 24 at the time of stopping power supply to the discharge lamp 24. The initial signal generator 32 is equivalent to the signal generator used in the aforementioned scheme (II).

There are two specifications for voltages, "12 V" and "24 V", for a vehicular power supply. According to this embodiment, when the specified voltage of the battery 17 is 12 V, the comparison characteristic shown in Figure 4 is used to detect a dropped voltage at the beginning of lighting of the discharge lamp, or the comparison characteristic shown in Figure 8 is used to detect an excess voltage at the beginning of lighting of the discharge lamp, whereas when the specified voltage of the battery 17 is 24 V, the comparison characteristic shown in Figure 5 is used to detect a dropped voltage at the beginning of lighting of the discharge lamp, or the comparison characteristic shown in Figure 8 is used to detect an excess voltage at the beginning of lighting of the discharge lamp. With regard to the detection of a dropped voltage, the signal SEL is set to an H-level signal to select the reference to the lighting state of the discharge lamp 24 when the specified voltage of the battery 17 is 12 V. In the case of the battery 17 having a specified voltage of 24 V or the detection of an excess voltage, the signal SEL is set to an L-level signal so that the lighting state of the discharge lamp 24 is not referred to at the time of stopping power supply to the discharge lamp 24.

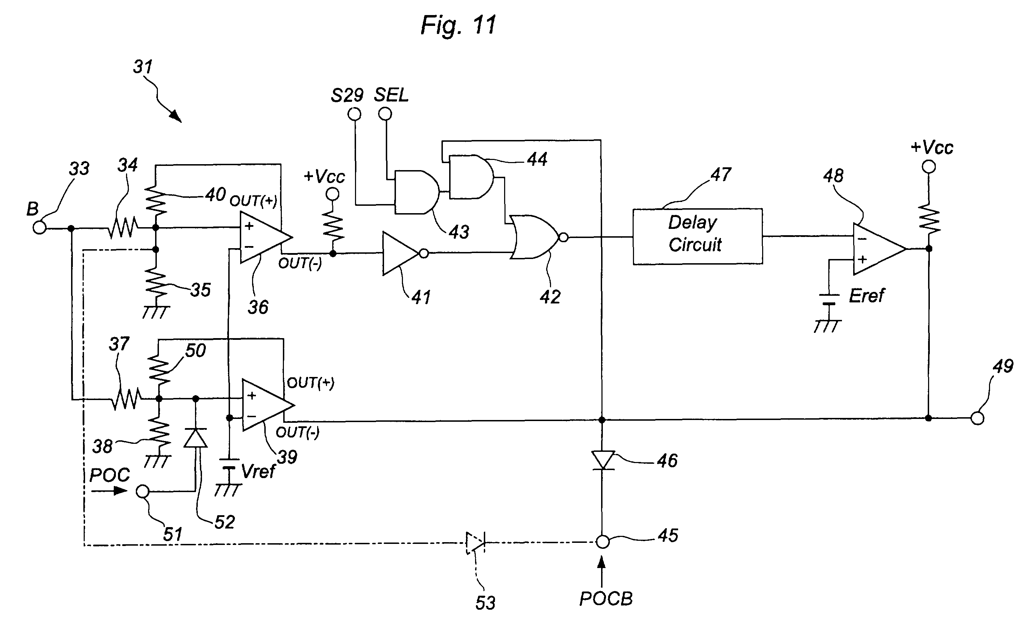

Figure 11 exemplifies the structure of the comparing circuit 31. When the battery voltage B is supplied to a terminal 33, it is sent via resistors 34 and 35 to the positive input terminal of a hysteresis comparator 36, and is sent via resistors 37 and 38 to the positive input terminal of a hysteresis comparator 39.

The hysteresis comparator 36 is comparison means for detecting a drop in battery voltage and the hysteresis comparator 39 is comparison means for detecting an excessive level of the battery voltage. A reference voltage Vref is supplied to both the negative input terminals of those comparators 36 and 39, each of which has two output terminals OUT(+) and OUT(-). The output terminal OUT(+) is for the hysteresis output, which becomes an H-level signal (a high-impedance signal to be accurate) when the potential at the positive input terminal of the comparator 36 or 39 is higher than the potential at the negative input terminal thereof, and becomes an L-level signal when the potential at the positive input terminal of the comparator 36 or 39 is lower than the potential at the negative input terminal thereof. What appears at the output terminal OUT(-) is an output which is in the opposite phase to that of the output from the output terminal OUT(+) and which is used as a comparison output.

To begin with, the circuit portion associated with the detection of a drop in battery voltage B will be discussed. The terminal OUT(+) of the hysteresis comparator 36 is connected via a resistor 40 to the positive input terminal of the comparator 36, and the output signal from the terminal OUT(-) is sent via a NOT gate 41 to one input terminal of a 2-input NOR gate 42. A logical product of the lighting detection signal S29 and the signal SEL, obtained by an AND gate 43, and the signal from the initial signal generator 32 are input to an AND gate 44, yielding another logical product. This logical product from the AND gate 44 is sent to the other input terminal of the NOR gate 42. The signal from the initial signal generator 32 (which will be specifically discussed later) is sent to the AND gate 44 from the terminal 45 via a reverse-biased diode 46.

The output signal of the NOR gate 42 is sent via a delay circuit 47 to the negative input terminal of a comparator 48 at the subsequent stage, with a reference voltage Eref supplied to the positive input terminal of the comparator 48.

The output terminal of the comparator 48 is connected to a predetermined power supply terminal via a pull-up resistor and to an output terminal 49 of the comparing circuit 31.

With regard to the circuit portion associated with the detection of the excessive level of the battery voltage B, the terminal OUT(+) of the hysteresis comparator 39 is connected via a resistor 50 to the positive input terminal of the comparator 39, and the signal supplied to the terminal 51 from the initial signal generator 32 (which will be specifically discussed later) is input to the positive input terminal of the comparator 39 via a forward-biased diode 52. The terminal OUT(-) of the comparator 39 is connected to the anode of the diode 46 and the terminal 49.

When the battery 17 has a specified voltage of 24 V, a diode 53 having a cathode connected to the terminal 45 and an anode connected to the positive input terminal of the comparator 36 is provided as indicated by a two-dot chain line in Figure 11.

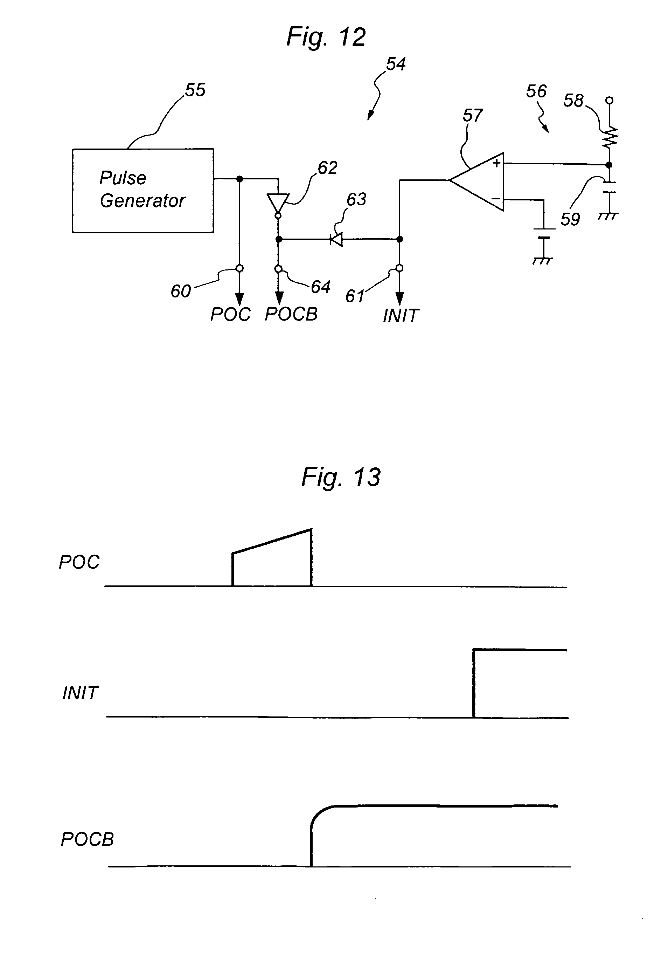

Figure 12 shows a structural example 54 of the initial signal generator 32, in which three kinds of signals as shown in Figure 13 are generated at the beginning of lighting of the discharge lamp 24 by a pulse generator 55 and a timer circuit 56 (including a comparator 57, a resistor 58 and a capacitor 59).

The pulse generator 55 sends a signal of a short pulse width (denoted by "POC") to a terminal 60. The output signal of the timer circuit 56 (which is denoted by "INIT") changes its level to an H level from an L level when the terminal voltage of the capacitor 59 rises from the beginning of lighting of the discharge lamp and the potential at the positive input terminal of the comparator 57 becomes higher than the potential at the negative input terminal (reference potential) thereof, and is sent to a terminal 61.

The remaining signals (denoted by "POCB") are a signal sent from the pulse generator 55 via a NOT gate 62 and a signal sent from the output terminal of the comparator 57 via a diode 63. The signal POCB sharply rises at the falling timing of the signal POC and thereafter becomes an H level as shown in Figure 13.

Of those signals, the signals POC and POCB are used in association with the comparing circuit 31, and the signal POC is sent to the terminal 51 of the comparing circuit 31 and the signal POCB is sent to the terminal 45 of the comparing circuit 31.

The operation of the comparing circuit 31 will now be described separately for the two cases where the battery 17 has a specified voltage of 12 V and a specified voltage of 24 V.

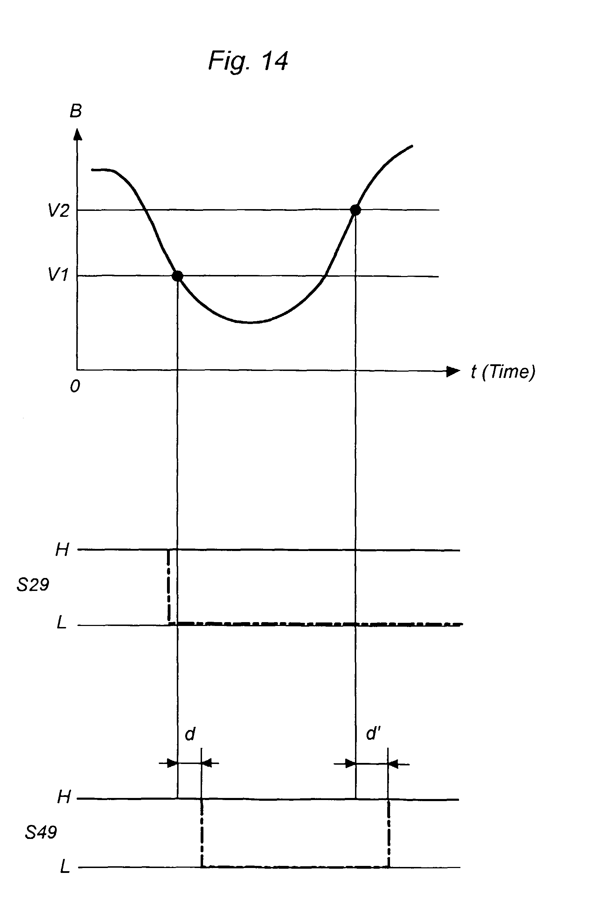

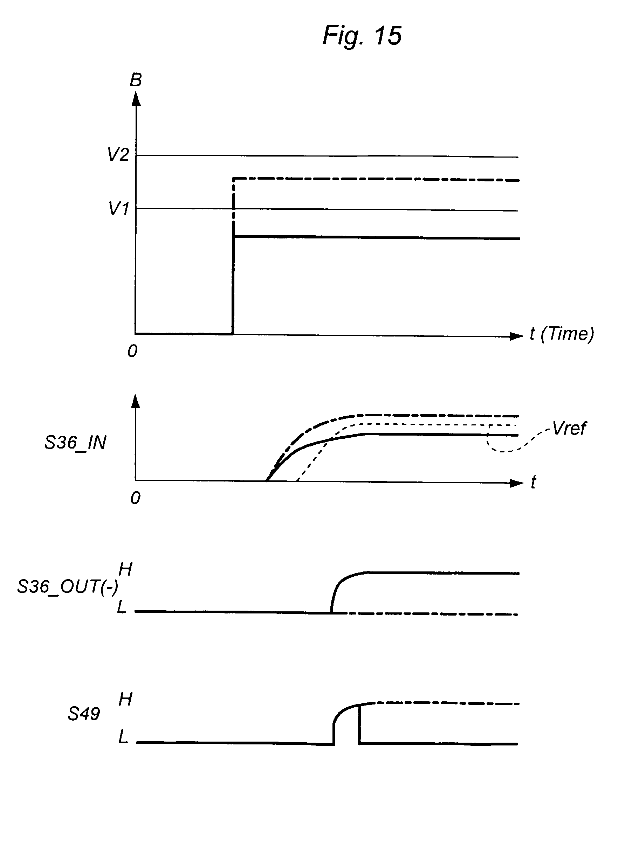

Figures 14 and 15 show changes in signals from the individual circuit portions associated with the detection of a drop in the battery voltage whose specified value is 12 V.

Figure 14 shows that, once the discharge lamp 24 is lit, the battery voltage B drops below the reference value V1 and then returns to exceed V2. In the diagram, "S49" indicates the signal level at the output terminal 49 of the comparing circuit 31 (it is assumed that power supply to the discharge lamp is permitted when the signal S49 has an H level and such power supply is inhibited when S49 has an L level), and "S29" is the aforementioned lighting detection signal.

When B < V1, the output from the terminal OUT(-) of the comparator 36 changes to an H-level signal from an L-level signal. In the case of 12 V, reference to the lighting state of the discharge lamp 24 is specified by the signal SEL. When the lighting detection signal S29 is an H-level signal (light-ON time) as indicated by the solid line in the figure, the output signals of the AND gates 43 and 44 are H-level signals (it should be noted that the signal POCB and the output from the terminal OUT(-) of the comparator 39 are both H-level signals), so that the output signal of the NOR gate 42 stays at the L level. In this case, therefore, S49 becomes an H-level signal, allowing power supply to the discharge lamp 24 even when the battery voltage drops. When the lighting detection signal S29 becomes an L-level signal (light-OFF time) as indicated by the one-dot chain line in the figure, by contrast, the output signal of the NOR gate 42 becomes an H-level signal. In this case, after a predetermined delay time ("d"), S49 becomes an L-level signal to inhibit power supply to the discharge lamp 24.

When B thereafter returns to be greater than V2 (B > V2), the signal from the output terminal OUT(-) of the comparator 36 changes to an L-level signal from the H-level signal and the output signal of the NOR gate 42 becomes an L-level signal. After a predetermined delay time ("d"'), S49 becomes an H-level signal to restart power supply to the discharge lamp 24.

The delay circuit 47 provided between the NOR gate 42 and the comparator 48 is equivalent to the aforementioned delay means 11, and serves to temporarily stop power supply to the discharge lamp in response to an AC-like change in battery voltage to thereby guarantee the stable circuit operation. The delay time d' (several tens of milliseconds) in the case of permitting power supply to the discharge lamp is set longer than the delay time d (several milliseconds) in the case of stopping power supply to the discharge lamp. This is because it is desirable to quickly stop power supply to the discharge lamp from the viewpoint of protecting the discharge lamp and the lighting circuit, whereas with regard to restarting power supply to the discharge lamp, it is desirable to provide a sufficient time to check the return of the battery voltage to a predetermined range from the viewpoint of the stable circuit operation.

Figure 15 is an explanatory diagram for the comparison operation at the beginning of lighting of the discharge lamp 24 in which the scheme (I) is used to select the reference value for comparison. In the figure, "S36_IN" indicates an input signal to the comparator 36 (a change in the reference voltage Vref indicated by the broken line), and "S36_OUT(-)" indicates the level of the signal from the terminal OUT(-) of the comparator 36.

The solid line in this figure indicates the case where the battery voltage B is smaller than V1 (B < V1) at the beginning of lighting of the discharge lamp 24. As the rising of S36_IN is quicker than that of Vref, S36_out(-) temporarily becomes an L-level signal. Further, because the signal SEL has an H level and the lighting detection signal S29 has an L level, the signal S49 becomes an H level only in a short period immediately after the lighting has been started, and becomes an L level thereafter, so that power supply to the discharge lamp 24 remains stopped.

When the battery voltage B satisfies V1 < B < V2 at the beginning of lighting of the discharge lamp 24 as indicated by the one-dot chain line in the figure, by contrast, S36_OUT(-) becomes an L-level signal. Further, as the signal SEL has an H level and the lighting detection signal S29 has an L level, the signal S49 becomes an H level immediately after the lighting has been started, and stays at the H level thereafter due to B > V1. This permits power to be kept supplied to the discharge lamp 24. Even when the discharge lamp 24 is activated thereafter by the igniter circuit 23 and the battery voltage B drops due to the lighting of the discharge lamp 24, power supply to the discharge lamp 24 is not stopped because the lighting detection signal S29 is at an H level.

A description will now be given of the detection of a drop in the battery voltage whose specified value is 24 V. It should be noted that the values of V1 and V2 mentioned below are generally different from those in the case of 12 V.

With regard to the case where once the discharge lamp 24 is lit, the battery voltage B drops below the reference value V1 and then goes up and beyond V2, unlike in the above-discussed case of 12 V, the lighting state of the discharge lamp is not referred to. This is because the signal SEL is selected to be an L-level signal so that the outputs of the AND gates 43 and 44 become L-level signals irrespective of the level of the lighting detection signal S29. Therefore, the operation in this case is the same as the one (see the one-dot chain line) in the case where the discharge lamp is turned off, which has been discussed with reference to Figure 1; power supply to the discharge lamp 24 is stopped after the passage of the delay time d from the point when the battery voltage B became smaller than the predetermined reference value V1, and power supply to the discharge lamp 24 will be restarted after the passage of the delay time d' from the point when the battery voltage thereafter exceeds the predetermined reference value V2.

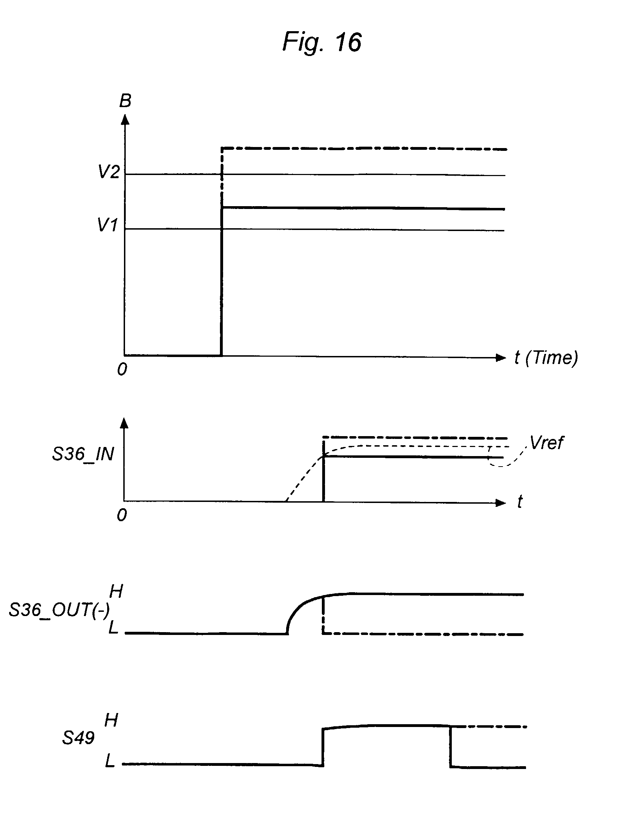

Figure 16 is an explanatory diagram for the comparison operation at the beginning of lighting of the discharge lamp 24 in which the scheme (II) is employed to select the reference value for comparison and the signal POCB is used.

The solid line in this figure indicates the case where the battery voltage B is smaller than V2 (B < V2) at the beginning of lighting of the discharge lamp 24. As the signal POCB is input via the diode 53 to the positive input terminal of the comparator 36, S36_OUT(-) is forced to temporarily become an H level in the L-level duration of the signal POCB (i.e., the input voltage to the comparator 36 becomes lower than V1 this time). Therefore, S49 becomes an H level only in a short period immediately after the lighting has been started, and becomes an L level thereafter due to B < V2. As a result, power supply to the discharge lamp 24 is stopped.

When B > V2 at the beginning of lighting of the discharge lamp 24 as indicated by the one-dot chain line in the figure, by contrast, the signal S49 remains at the H level after the signal POCB is input to the positive input terminal of the comparator 36, thus permitting power to be supplied to the discharge lamp 24.

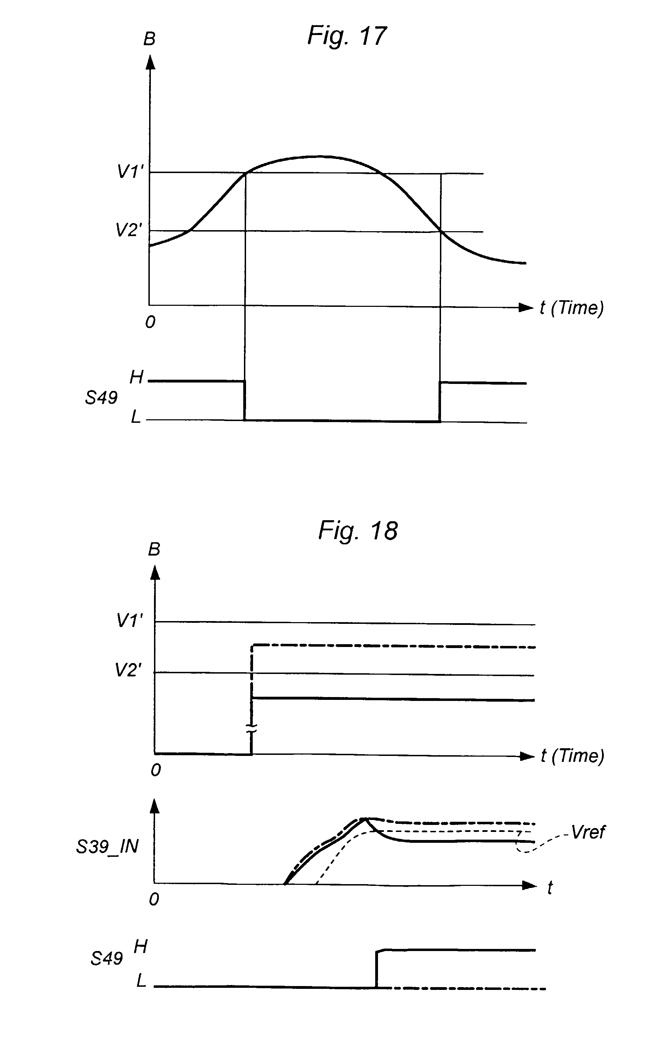

Figures 17 and 18 show changes in signals from the individual circuit portions associated with the detection of the excess voltage of the battery 17 whose specified value is 12 V.

Figure 17 shows the situation where once the discharge lamp 24 is lit, the battery voltage B exceeds the reference value V1' and then goes down and below V2'.

When the battery voltage B becomes greater than V1' (B > V1'), the output signal from the terminal OUT(-) of the comparator 39 changes to an L level from an H level. At the time of detecting an excess voltage, however, the lighting state of the discharge lamp 24 is not referred to, so that S49 becomes an L-level signal, cutting off power supply to the discharge lamp. When the battery voltage B returns to the state of B < V2' thereafter, the output signal from the terminal OUT(-) of the comparator 39 changes to an H-level signal from the L-level signal. As a result, S49 becomes an H-level signal, permitting power supply to the discharge lamp 24 to be restarted.

Figure 18 is an explanatory diagram for the comparison operation at the beginning of lighting of the discharge lamp 24 in which the scheme (II) is employed to select the reference value for comparison and the signal POC is used.

The solid line in this figure indicates the case where the battery voltage B is smaller than V2' (B < V2') at the beginning of lighting of the discharge lamp 24. As the signal POC is input via the diode 52 to the positive input terminal of the comparator 39, the signal from the terminal OUT(-) of the comparator 39 is forced to temporarily become an L level in the H-level duration of the signal POC (i.e., the input voltage to the comparator 39 exceeds V1' this time). Therefore, S49 becomes an L level only in a short period immediately after the lighting has been started, and becomes an H level thereafter due to B < V2'. As a result, power supply to the discharge lamp 24 is allowed.

When B > V2' at the beginning of lighting of the discharge lamp 24 as indicated by the one-dot chain line in the figure, by contrast, the signal S49 remains at the L level after the signal POC is input to the comparator 39, thus inhibiting power supply to the discharge lamp 24.

Since it is apparent from the circuit structure in Figure 11 that the operation associated with the detection of an excess voltage when the specified voltage of the battery 17 is 24 V is the same as that for the case of 12 V except that the values of the reference values V1' and V2' are different, the description of the operation will be omitted.

Since the signal POCB to be supplied to the terminal 45 in the circuit in Figure 11 at the beginning of lighting of the discharge lamp 24 serves to set the initial value of the signal S49 to an L level, the signal POCB should have become an H level in order for S49 to become an H level.

When the battery voltage varies significantly so that the inversion of the output from the terminal OUT(-) of the comparator 39 may be repeated frequently, delay means for suppressing the frequency of signal inversion, such as a tandem correlation filter circuit, should be provided at the output stage of the comparator 39.

Although the lighting state of the discharge lamp is not referred to at the time of detecting an excess voltage in this embodiment, such reference may of course be made (i.e., the structure, which permits power to be kept supplied to the discharge lamp as long as the discharge lamp is lit even when the battery voltage is excessively large, may be used).

As apparent from the above description, according to the first feature of this invention, the reference value for comparison based on which whether or not to permit power supply to the discharge lamp at beginning of lighting of the discharge lamp is determined with respect to the supply voltage or current is selected from the first and second reference values associated with the comparison means, so that common comparison means can be used at the beginning of lighting of the discharge lamp and after the discharge lamp is lit. This prevents the circuit structure from becoming complicated.

According to the second feature of this invention, the signal which is generated only at the beginning of lighting of the discharge lamp is input to the comparison means to temporarily force inhibition of power supply to the discharge lamp, so that the reference value for comparison for determining whether or not to permit power supply to the discharge lamp at the beginning of lighting of the discharge lamp with respect to the supply voltage or current can easily be set to one of the reference values for comparison associated with the supply voltage or current after the discharge lamp is lit.

According to the third feature of this invention, the rising of the reference voltage associated with the comparison means at the beginning of lighting of the discharge lamp is delayed or is carried out gradually as compared with the rising of the supply voltage or current so that it is temporarily considered that the supply voltage or current is within the allowable range, whereby the reference value for comparison for determining whether or not to permit power supply to the discharge lamp at the beginning of lighting of the discharge lamp with respect to the supply voltage or current can easily be set to one of the reference values for comparison associated with the supply voltage or current after the discharge lamp is lit.

According to the fourth feature of this invention, when it is determined that the supply voltage or current is too small or too large and the discharge lamp is not lit, power supply to the discharge lamp is stopped, so that it is possible to control to keep supplying power to the discharge lamp to maintain the lighting state even when the supply voltage or current is shifted from a predetermined range as long as the discharge lamp is kept lit.

According to the fifth feature of this invention, inhibition or restarting of power supply to the discharge lamp is carried out with a predetermined delay time, so that the supply of power to the discharge lamp and the inhibition of power supply are not frequently repeated even when the supply voltage or current varies in a short cycle, thereby protecting the discharge lamp and stabilizing the circuit operation.

## Claims

1. A discharge lamp lighting circuit (1,16) comprising power-supply permission determining means (8,28) which has comparison means (9,31) for detecting a supply voltage or current (VB), for performing a comparison to check if said supply voltage or current (VB) lies within a predetermined range and for determining whether or not to permit power supply (2,21) to a discharge lamp (7,24) in accordance with the comparison result, characterised in that
said comparison means (9,31) has a hysteresis characteristic based on first and second reference values (V1, V2) ;
at the beginning of the operation of the discharge lamp (7,24), the power supply permission determining means (9,31) determines whether or not to permit power supply to the discharge lamp (7,24) as a result of said comparison means (9,31) using either said first reference value (V₁) or said second reference value (V₂) as the reference value for comparison; and,
during the operation of the discharge lamp (7,24), the power supply permission determining means (9,31) stops power supply to the discharge lamp (7,24) when the comparison means (9,31) determines that the supply voltage or current (VB) is too small or too large with reference to said first reference value (V₁), and restarts the power supply to the discharge lamps (7,24) when the comparison means (9,31) determines that the supply voltage or current (VB) has returned to an acceptable value with reference to said second reference value (V₂).

2. The discharge lamp lighting circuit according to claim 1, wherein at a time of rising a reference voltage (V_{ref}) associated with said comparison means (8) at beginning of lighting of said discharge lamp (7), that rise is delayed or is carried out more gently as compared with rising of said supply voltage or current (VB) to thereby temporarily consider that said supply voltage or current (VB) is within said allowable range, and a reference value for comparison associated with said supply voltage or current (VB) at beginning of lighting of said discharge lamp (7) is defined to be said first reference value (V1).

3. The discharge lamp lighting circuit according to claim 1, further comprising a signal generator (32) for producing a signal to be generated only at beginning of lighting of said discharge lamp (24) and sending said signal as an input signal to said comparison means (31) to temporarily force inhibition of power supply to said discharge lamp (24) and a reference value for comparison associated with said supply voltage or current (VB) at beginning of lighting of said discharge lamp (7) is defined to be said second reference value (V2).

4. The discharge lamp lighting circuit according to claim 3, wherein said signal generator (32) is included in said power-supply permission determining means.

5. The discharge lamp lighting circuit according to claim 3 or 4, wherein said signal generator (32) comprises a pulse generator for generating a signal with a short pulse width, and a timer circuit including a comparator, a resistor and a capacitor.

6. The discharge lamp lighting circuit according to any one of the preceding claims, further comprising lighting detection means (14,29) for detecting if said discharge lamp (7,24) is lit, whereby when said comparison means (9,31) determines that said supply voltage or current (VB) is too small or too large and said discharge lamp (7,24) is not lit, said power-supply permission determining means (8,28) stops power supply to said discharge lamp (7,24), and when said comparison means (9,31) thereafter determines from a result of comparison between said supply voltage or current (VB) with said second reference value (V2) that said supply voltage or current (VB) has returned to said allowable range, said power-supply permission determining means (8,28) restarts power supply to said discharge lamp (7,24).

7. The discharge lamp lighting circuit according to any one of the preceding claims, further comprising delay means, (11,47) for causing an output of said comparison means (9,31) to have a predetermined delay time, whereby said power-supply permission determining means (9,28) stops power supply to said discharge lamp (7,28) upon passage of said predetermined delay time after said comparison means (9,31) determines from a result of comparison between said supply voltage or current (VB) with said first reference value (V1) that said supply voltage or current (VB) is small or large, and said power-supply permission determining means (8,28) restarts power supply to said discharge lamp (7,24) upon passage of said predetermined delay time after said comparison means (9,31) thereafter determines from a result of comparison between said supply voltage or current (VB) with said second reference value (V2) that said supply voltage or current (VB) has returned to said allowable range.

## Patentansprüche

1. Entladungslampen-Lichtschaltung (1, 16) mit einer Stromversorgungsgestattung-Bestimmungseinrichtung (8, 28), die eine Vergleichseinrichtung (9, 31) zum Feststellen einer Versorgungsspannung oder eines Versorgungsstroms (VB) und zum Durchführen eines Vergleichs aufweist, um zu prüfen, ob die Versorgungsspannung oder der Versorgungsstrom (VB) innerhalb eines vorbestimmten Bereichs liegt, und um in Übereinstimmung mit dem Vergleichsergebnis zu bestimmen, ob die Stromversorgung (2, 21) zu einer Entladungslampe (7, 24) gestattet wird oder nicht, dadurch gekennzeichnet, daß
die Vergleichseinrichtung (9,31) eine Hysteresekennlinie auf der Basis eines ersten und eines zweiten Bezugswerts (V1, V2) aufweist,
die Stromversorgungsgestattung-Bestimmungseinrichtung (9, 31) am Beginn des Betriebs der Entladungslampe (7, 24) in Übereinstimmung mit dem Ergebnis der Vergleichseinrichtung (9, 31), die entweder den ersten Bezugswert (V₁) oder den zweiten Bezugswert (V₂) als Bezugswert für den Vergleich verwendet, bestimmt, ob die Stromversorgung zu der Entladungslampe (7, 24) gestattet wird oder nicht, und
die Stromversorgungsgestattungs-Bestimmungseinrichtung (9, 31) während des Betriebs der Entladungslampe (7, 24) die Stromversorgung zu der Entladungslampe (7, 24) stoppt, wenn die Vergleichseinrichtung (9, 31) mit Bezug auf den ersten Bezugswert (V₁) bestimmt, daß die Versorgungsspannung oder der Versorgungsstrom (VB) zu klein oder zu groß ist, und die Stromversorgung zu der Entladungslampe (7, 24) wieder beginnt, wenn die Vergleichseinrichtung (9, 31) mit Bezug auf den zweiten Bezugswert (V₂) bestimmt, daß die Versorgungsspannung oder der Versorgungsstrom (VB) zu einem annehmbaren Wert zurückgekehrt ist.

2. Entladungslampen-Lichtschaltung nach Anspruch 1, wobei während des Anstiegs einer Bezugsspannung (V_{ref}), die mit der Vergleichseinrichtung (8) am Beginn des Leuchtens der Entladungslampe (7) assoziiert ist, dieser Anstieg verzögert oder im Vergleich zu dem Anstieg der Versorgungsspannung oder dem Versorgungsstrom (VB) sanfter ausgeführt wird, damit die Versorgungsspannung oder der Versorgungsstrom (VB) vorübergehend als innerhalb des gestatteten Bereichs liegend betrachtet wird, und wobei als Bezugswert für den Vergleich, der mit der Versorgungsspannung oder dem Versorgungsstrom (VB) am Beginn des Leuchtens der Entladungslampe (7) assoziiert ist, der erste Bezugswert (V1) definiert ist.

3. Entladungslampen-Lichtschaltung nach Anspruch 1, die weiterhin einen Signalerzeuger (32) zum Erzeugen eines Signals, das nur am Beginn des Leuchtens der Entladungslampe (24) zu erzeugen ist, und zum Senden des Signals als Eingabesignal zu der Vergleichseinrichtung (31) umfaßt, um die Verhinderung der Stromversorgung zu der Entladungslampe (24) vorübergehend zu erzwingen, wobei als Bezugswert für den Vergleich, der mit der Versorgungsspannung oder dem Versorgungsstrom (VB) am Beginn des Leuchtens der Entladungslampe (7) assoziiert ist, der zweite Bezugswert (V2) definiert ist.

4. Entladungslampen-Lichtschaltung nach Anspruch 3, wobei der Signalerzeuger (32) in der Stromversorgungsgestattung-Bestimmungseinrichtung enthalten ist.

5. Entladungslampen-Lichtschaltung nach Anspruch 3 oder 4, wobei der Signalerzeuger (32) einen Impulserzeuger zum Erzeugen eines Signals mit einer kurzen Impulsbreite und eine Zeitschaltung einschließlich eines Vergleichers, eines Widerstands und eines Kondensators umfaßt.

6. Entladungslampen-Lichtschaltung nach wenigstens einem der vorstehenden Ansprüche, die weiterhin eine Leuchtdetektoreinrichtung (14, 29) umfaßt, um festzustellen, ob die Entladungslampe (7, 24) leuchtet, wobei wenn die Vergleichseinrichtung (9, 31) bestimmt, daß die Versorgungsspannung oder der Versorgungsstrom (VB) zu klein oder zu groß ist und die Entladungslampe (7, 24) nicht leuchtet, die Stromversorgungsgestattung-Bestimmungseinrichtung (8, 28) die Stromversorgung zu der Entladungslampe (7, 24) stoppt, und wenn die Vergleichseinrichtung (9, 31) danach aus einem Ergebnis des Vergleichs zwischen der Versorgungsspannung oder dem Versorgungsstrom (VB) und dem zweiten Bezugswert (V2) bestimmt, daß die Versorgungsspannung oder der Versorgungsstrom (VB) zu dem gestatteten Bereich zurückgekehrt ist, die Stromversorgungsgestattung-Bestimmungseinrichtung (8, 28) die Stromversorgung zu der Entladungslampe (7, 24) wieder beginnt.

7. Entladungslampen-Lichtschaltung nach wenigstens einem der vorstehenden Ansprüche, die weiterhin eine Verzögerungseinrichtung (11, 47) umfaßt, um zu veranlassen, daß eine Ausgabe der Vergleichseinrichtung (9, 31) eine vorbestimmte Verzögerungszeit aufweist, so daß die Stromversorgungsgestattung-Bestimmungseinrichtung (8, 28) die Stromversorgung zu der Entladungslampe (7, 24) nach dem Vergehen der vorbestimmten Verzögerungszeit stoppt, nachdem die Vergleichseinrichtung (9, 31) aus einem Ergebnis des Vergleichs zwischen der Versorgungsspannung oder dem Versorgungsstrom (VB) und dem ersten Bezugswert (V1) bestimmt, daß die Versorgungsspannung oder der Versorgungsstrom zu klein oder zu groß ist, und so daß die Stromversorgungsgestattung-Bestimmungseinrichtung (8, 28) die Stromversorgung zu der Entladungslampe (7, 24) nach dem Vergehen der vorbestimmten Verzögerungszeit wieder beginnt, nachdem die Vergleichseinrichtung (9, 31) danach aus einem Ergebnis des Vergleichs zwischen der Versorgungsspannung oder dem Versorgungsstrom (VB) und dem zweiten Bezugswert (V2) bestimmt, daß die Versorgungsspannung oder der Versorgungsstrom (VB) zu dem gestatteten Bereich zurückgekehrt ist.

## Revendications

1. Circuit (1, 16) d'éclairage par lampe à décharge qui comprend un moyen (8, 28) de détermination d'une permission d'alimentation en énergie, qui comporte un moyen de comparaison (9, 31) pour détecter une tension ou un courant d'alimentation (VB), pour effectuer une comparaison pour vérifier si le dit courant ou la dite tension d'alimentation (VB) se situe dans un intervalle prédéterminé, et pour décider, selon le résultat de la comparaison, de permettre ou non l'alimentation en énergie (2, 21) d'une lampe à décharge (7, 24), caractérisé en ce que
le dit moyen de comparaison (9, 31) présente une caractéristique d'hystérésis basée sur une première et une seconde valeurs de référence (V1, V2);
au début du fonctionnement de la lampe à décharge (7, 24), le moyen (8, 28) de détermination d'une permission d'alimentation en énergie décide de permettre ou non l'alimentation en énergie de la lampe à décharge (7, 24), comme résultat du signal du dit moyen de comparaison (9, 31) utilisant soit la dite première valeur de référence (V1) soit la dite seconde valeur de référence (V2) en tant que valeur de référence pour la comparaison; et,
pendant le fonctionnement de la lampe à décharge (7, 24), le moyen (8, 28) de détermination d'une permission d'alimentation en énergie coupe l'alimentation en énergie de la lampe à décharge (7, 24) lorsque le moyen de comparaison (9, 31) détermine que la tension ou le i courant d'alimentation (VB) est trop faible ou trop fort par rapport à la dite première valeur de référence (V1), et recommence l'alimentation en énergie des lampes à décharge (7, 24) lorsque le moyen de comparaison (9, 31) détermine que la tension ou le courant d'alimentation (VB) est revenu à une valeur acceptable par rapport à la dite seconde valeur de référence (V2).

2. Circuit d'éclairage par lampe à décharge selon la revendication 1 dans lequel, au moment d'augmenter une tension de référence (Vref) associée au dit moyen de comparaison (8) au début du fonctionnement de la dite lampe à décharge (7), cette augmentation est retardée ou mise en oeuvre plus doucement, par rapport à l'augmentation de la dite tension ou du dit courant d'alimentation (VB) pour ainsi considérer temporairement que la dite tension ou le dit courant d'alimentation (VB) se situe dans le dit intervalle acceptable, et qu'une valeur de référence de comparaison associée à la dite tension ou au dit courant d'alimentation (VB) au début du fonctionnement de la dite lampe à décharge (7) est définie pour être la dite première valeur de référence (V1).

3. Circuit d'éclairage par lampe à décharge selon la revendication 1, qui comprend de plus un générateur de signaux (32) pour produire un signal qui est généré uniquement au début du fonctionnement de la dite lampe à décharge (24), et envoyer le dit signal en tant que signal d'entrée au dit moyen de comparaison (31) pour forcer temporairement l'inhibition de l'alimentation en énergie de la dite lampe à décharge (24), et une valeur de référence de comparaison associée à la dite tension ou au dit courant d'alimentation (VB) au début du fonctionnement de la dite lampe à décharge (7) est définie pour être la dite seconde valeur de référence (V2).

4. Circuit d'éclairage par lampe à décharge selon la revendication 3, dans lequel le dit générateur de signal (32) est inclus dans le dit moyen de détermination d'une permission d'alimentation en énergie.

5. Circuit d'éclairage par lampe à décharge selon la revendication 3 ou 4, dans lequel le dit générateur de signaux (32) comprend un générateur d'impulsions pour engendrer un signal avec une courte largeur d'impulsion, et un circuit d'horloge comprenant un comparateur, une résistance et un condensateur.

6. Circuit d'éclairage par lampe à décharge selon l'une quelconque des revendications précédentes, qui comprend de plus un moyen de détection d'éclairage (14, 29) pour détecter si la dite lampe à décharge (7, 24) est allumée, grâce auquel, lorsque le dit moyen de comparaison (9, 31) détermine que la dite tension ou le dit courant d'alimentation (VB) est trop faible ou trop fort, et la dite lampe à décharge (7, 24) n'est pas allumée, le dit moyen (8, 28) de détermination d'une permission d'alimentation en énergie arrête l'alimentation en énergie de la dite lampe à décharge (7, 24), et lorsque le dit moyen de comparaison (9, 31) détermine ensuite, à partir du résultat de la comparaison entre la dite tension ou le dit courant d'alimentation (VB) et la dite seconde valeur de référence (V2), que la dite tension ou le dit courant d'alimentation (VB) est revenu dans le dit intervalle acceptable, le dit moyen (8, 28) de détermination d'une permission d'alimentation en énergie recommence l'alimentation en énergie de la dite lampe à décharge (7, 24).

7. Circuit d'éclairage par lampe à décharge selon l'une quelconque des revendications précédentes, qui comprend de plus un moyen de retard (11, 47) pour produire un retard prédéterminé d'une sortie du dit moyen de comparaison (9, 31), grâce à quoi le dit moyen (8, 28) de détermination d'une permission d'alimentation en énergie arrête l'alimentation en énergie de la dite lampe à décharge (7, 24) après écoulement de la dite période de retard prédéterminée après que le dit moyen de comparaison (9, 31) détermine comme résultat de la comparaison entre la dite tension ou le dit courant d'alimentation (VB) avec la dite première valeur de référence (V1), que la dite tension ou le dit courant d'alimentation (VB) est faible ou fort, et le dit moyen (8, 28) de détermination d'une permission d'alimentation en énergie reprend l'alimentation en énergie de la dite lampe à décharge (7, 24) lors du passage de la dite période de retard prédéterminée après que le dit moyen de comparaison (9, 31) détermine ensuite comme résultat de la comparaison entre la dite tension ou le dit courant d'alimentation (VB) et la dite seconde valeur de référence (V2), que la dite tension ou le dit courant d'alimentation (VB) est revenu dans le dit intervalle acceptable.
